(19) Europäisches Patentamt
European Patent Office
Office européen des brevets

(11) **EP 1 283 645 B1**

(12) **FASCICULE DE BREVET EUROPEEN**

(45) Date de publication et mention de la délivrance du brevet:
**15.10.2008 Bulletin 2008/42**

(51) Int Cl.:
***H04Q 7/36*** *(2006.01)*

(21) Numéro de dépôt: **02291977.3**

(22) Date de dépôt: **06.08.2002**

(54) **Planification des zones de localisation**

Planung von Lokalisierungszonen

Location areas planning

(84) Etats contractants désignés:
**AT BE BG CH CY CZ DE DK EE ES FI FR GB GR IE IT LI LU MC NL PT SE SK TR**

(30) Priorité: **10.08.2001 FR 0110722**

(43) Date de publication de la demande:
**12.02.2003 Bulletin 2003/07**

(73) Titulaire: **Société Française du Radiotéléphone-SFR**
**75008 Paris (FR)**

(72) Inventeur: **Fattouch, Imad**
**75013 Paris (FR)**

(74) Mandataire: **Debay, Yves**
**Cabinet Debay**
**126 Elysée 2**
**78170 La Celle Saint Cloud (FR)**

(56) Documents cités:
**US-A- 6 044 273          US-A- 6 141 552**

- **ALEMAN-LLANES E ET AL: "PCS SUBSCRIBERS MOBILITY MODELING USING FRACTIONAL BROWNIAN MOTION (FBM)" EUROPEAN TRANSACTIONS ON TELECOMMUNICATIONS, EUREL PUBLICATION, MILANO, IT, vol. 11, no. 2, mars 2000 (2000-03), pages 191-198, XP000949770 ISSN: 1124-318X**
- **SAHA D ET AL: "Design of a personal communication services network (PCSN) for optimum location area size" PERSONAL WIRELESS COMMUNICATIONS, 1997 IEEE INTERNATIONAL CONFERENCE ON MUMBAI, INDIA 17-19 DEC. 1997, NEW YORK, NY, USA, IEEE, US, 17 décembre 1997 (1997-12-17), pages 404-408, XP010268074 ISBN: 0-7803-4298-4**

**Description**

La présente invention concerne les réseaux de radiotéléphonie cellulaire et plus particulièrement la définition de leur topologie en fonction des divers centres nodaux, de niveaux hiérarchiques différents, qui les composent.

Un réseau de radiotéléphonie cellulaire, comme le réseau GSM par exemple, comporte une pluralité de stations radio de base auxquelles les terminaux mobiles se rattachent. Les stations de base sont reliées entre elles par le réseau téléphonique filaire et elles assurent la couverture radio de cellules respectives qui présentent des recouvrements pour éviter la coupure des communications lorsque les terminaux mobiles changent de cellule.

Lorsqu'un utilisateur met sous tension son terminal mobile, celui-ci doit se rattacher à la station de base de sa cellule. Pour cela, il signale sa présence par émission d'un message dans un canal de signalisation, appelé voie balise, et indique aussi les niveaux de champ qu'il reçoit des stations à portée radio, avec l'identité de celles-ci. Ce message est analysé par le réseau et ce dernier rattache le terminal à la station dont il reçoit le signal le plus élevé. Le terminal mobile est ainsi inscrit dans une table de mobilité d'un centre nodal gestionnaire de mobilité, appelé BSC, (Base Station Controller, pour Contrôleur de Stations de Base). Les tables des divers BSC représentent donc les positions des terminaux sous tension, en communication ou simplement en veille. Les appels d'autres terminaux à destination d'un terminal peuvent ainsi être routés dans le réseau, par consultation des tables de mobilité.

Par cellule on entend un espace de diffusion autour d'une station dans lequel les ondes d'émission de la station demeurent d'une part au-dessus d'un niveau de champ déterminé et d'autre part au-dessus du niveau de champ reçu des autres cellules du réseau.

Si le terminal passe de sa cellule à une autre, le niveau de signal utile reçu en provenance de sa station devient nettement inférieur à celui qu'il reçoit de la station de la nouvelle cellule. Lorsque le déséquilibre entre les deux niveaux dépasse un seuil d'hystérésis, la cellule d'origine efface le terminal de ses tables et la nouvelle cellule l'inscrit dans les siennes. Elle passe la main à l'autre, ce qui est désigné par le terme anglais Hand-Over. Outre l'identité du terminal, les deux cellules doivent échanger des données spécifiant en particulier le correspondant, si le terminal était en communication.

Outre le réseau filaire reliant les stations de bases à des concentrateurs de trafic reliés au réseau commuté, qui écoule le trafic des terminaux radio, il existe donc en parallèle un réseau de signalisation pour gérer les équipements, stations de base et autres, du réseau radio, en fonction des données de service ou signalisations échangées entre les cellules, pour gérer la mobilité des terminaux.

Le réseau de signalisation est souvent intégré avec l'autre et est en fait constitué de circuits ou voies temporelles réservées. Il immobilise donc un certain pourcentage des ressources et il est donc souhaitable de maintenir sa taille, en nombre de circuits, au niveau le plus faible compatible avec le taux de disponibilité nécessaire pour transmettre les signalisations dans les délais imposés.

Il est connu dans l'art antérieur, par le document US 6 141 552, une méthode de modélisation de la mobilité d'utilisateur de terminaux radiotéléphoniques se déplaçant typiquement dans une ville contenant des rues perpendiculaires les unes aux autres (quatre directions possibles). Il est tenu compte de la vitesse, de la direction de l'utilisateur et de la taille des cellules. La mobilité des utilisateurs est décrite à l'aide d'un modèle de mouvement brownien fractionnel.

La présente invention vise à proposer une solution pour optimiser la taille du réseau de signalisation et améliorer la qualité du réseau de trafic en minimisant la signalisation due à la mobilité.

A cet effet, l'invention concerne un procédé de détermination de la topologie d'un réseau de radiotéléphonie cellulaire existant ou prévisionnel, comportant une pluralité de grappes à définir de stations de base de gestion de cellules respectives de tailles et positions déterminées ayant diverses portions de bords mitoyens de longueurs déterminées, pour gérer le trafic radio d'un nombre déterminé de terminaux mobiles répartis dans les cellules, les stations de chaque grappe étant reliées à un contrôleur de la grappe relié aux autres contrôleurs de grappe pour gérer la mobilité des terminaux, procédé caractérisé par le fait que

- les déplacements des terminaux sont modélisés en déterminant leur répartition dans les diverses cellules, sous la forme d'un algorithme de déplacement correspondant sensiblement à la loi de mouvement aléatoire de particules de gaz parfaits,
- des valeurs d'intensités de flux de franchissement des portions de bords mitoyens par les terminaux mobiles sont calculées pour un programme exécuté sur un calculateur, et
- une découpe entre cellules est réalisée et éventuellement affichée, pour délimiter des grappes optimales, en suivant des contours fermés de découpe correspondant à une valeur minimale du total des intensités des flux coupés par les divers contours.

Ainsi, dans le procédé selon l'invention, il a été avantageusement considéré que les terminaux se répartissent comme des particules de gaz sur la surface des diverses cellules, avec des déplacements erratiques qui, par unité de temps, ont une certaine probabilité de correspondre à un changement de cellule, le nombre déterminé de terminaux et leur vitesse moyenne déterminant ainsi un flux d'échange inter-cellules. Celles des cellules qui sont en quelque sorte jumelées, par l'échange mutuel d'un flux intense de terminaux, sont affectées à une même grappe, si bien que leur trafic d'échange de signalisations, image du flux matériel de terminaux, reste à l'intérieur de la grappe et ne nécessite que des ressources réseau locales. Les contrôleurs de grappe n'ont à échanger entre eux que le trafic de signalisation correspondant aux flux élémentaires coupés des bords des groupes, donc un trafic minimal.

De cette manière, selon l'invention, il est également possible d'avantageusement et significativement optimiser des réseaux prévisionnels à partir de réseaux existants, c'est-à-dire de prévoir le raccordement physique avant même de le mettre en oeuvre.

Avantageusement,

- le procédé et le système de calcul estiment, d'après des informations mémorisées spécifiant, en fonction de la nature d'une zone géographique appartenant à la position de chaque cellule, une densité moyenne de terminaux dans la cellule considérée,
- estiment, d'après ladite loi de mouvement, une vitesse moyenne de déplacement des terminaux, inversement proportionnelle à la densité, et
- calculent les flux inter-cellules de franchissement de chaque portion de bord mitoyen de la cellule considérée avec une cellule adjacente dont l'intensité varie comme la vitesse moyenne estimée, la densité et les longueurs des bords mitoyens considérés.

L'estimation de densité d'après des données géographiques permet de mieux prévoir les conditions réelles.

Pour effectuer la découpe, l'utilisateur du système de calcul, pour définir successivement les contours, qui après validation déclenchera un calcul de flux cherche à obtenir à chaque fois un minimum d'intensité de flux coupé pour la grappe considérée. Le système de calcul dispose d'une interface interactive.

Dans ce cas, il est préférable de fixer un seuil maximal d'intensité totale admissible de flux coupé par contour , et, lorsqu'on effectue un cheminement de coupure de flux pour définir l'un des contours, l'utilisateur valide la topologie de la grappe considérée si le seuil n'est pas dépassé.

Pour la découpe, l'utilisateur peut aussi fixer, par l'interface interactive, un nombre minimal de grappes à déterminer et, si ce nombre n'est pas finalement atteint pour une topologie déterminée de la pluralité de grappes, l'utilisateur effectue une autre détermination de topologie globale, selon cet autre contour.

L'utilisateur peut encore fixer, par l'interface interactive, un nombre minimal de stations par grappe et, si ce nombre est dépassé pour une topologie d'une des grappes, le système demande un autre contour et effectue une autre détermination de topologie globale, selon cet autre contour.

Pour affiner les prévisions, chaque représentation de cellule peut être découpée à l'aide d'une interface interactive en plusieurs zones de densités spécifiques de terminaux et le système de calcul calcule les dits flux d'après les vitesses de terminaux associées aux densités spécifiques des zones.

Dans ce cas, les valeurs de densités spécifiques ayant été validées par des relevés après mise en service de certaines des cellules du réseau, on regroupe plusieurs zones de cellules voisines en service en une cellule supplémentaire et on en calcule les dits flux à partir des densités spécifiques validées.

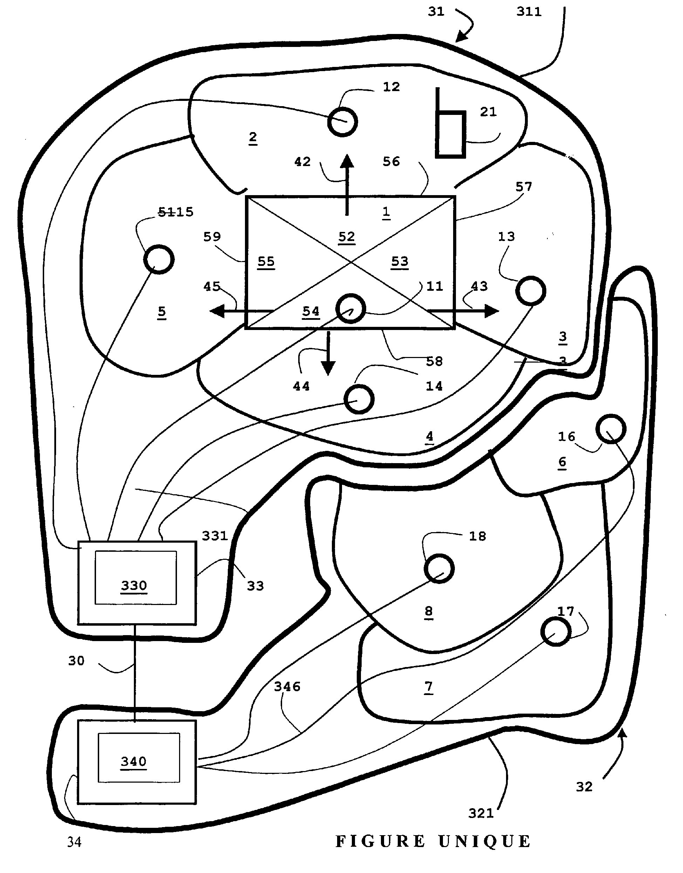

La présente invention sera mieux comprise à l'aide de la description d'un mode préféré de mise en oeuvre du procédé de l'invention, en référence à la figure unique annexée qui représente schématiquement la topologie d'un réseau de radiotéléphonie cellulaire en cours de définition.

Le réseau prévu qui est ici représenté comporte une pluralité de grappes 31, 32 de stations radio de base auxquelles se rattachent un nombre déterminé de terminaux radio mobiles comme celui référencé 21. Pour la clarté de l'exposé, on n'a ici représenté que deux grappes 31, 32, reliées entre elles par un réseau de signalisation 30. Dans un but de clarté, le réseau filaire d'écoulement du trafic radio n'a pas été représenté et un seul terminal radiomobile a été représenté.

La grappe 31 comporte des cellules radio 1 à 5 dont le trafic radio est assuré ou géré par des stations de base respectives référencées 11 à 15, toutes reliées à un centre BSC de contrôle de grappe 33 par des liaisons de service comme celle référencée 331. De même, la grappe 32 comporte des cellules radio 6 à 8 gérées par des stations référencées 16 à 18 toutes reliées à un centre BSC 34 par des liaisons de service comme celle référencée 346. Chaque centre BSC 33, 34 est prévu pour gérer la mobilité des terminaux 21, lorsqu'ils changent de cellule.

Le dessin représente en fait une topologie optimale que l'on recherche. En d'autres termes, il faut déterminer les liaisons comme 331 et 346, pour savoir comment répartir les rattachements des stations 11 à 18 aux BSC 33, 34.

Lorsqu'un terminal 21 passe d'une cellule 1 à une autre voisine, par exemple 3 , la baisse de niveau de réception qui en résulte, à chaque extrémité de sa liaison radio avec la station de rattachement 11, est détectée. L'inversion qui en résulte, entre le niveau de réception décroissant de la liaison utile et le niveau croissant de réception de signaux de service émis par la nouvelle station 13 de la nouvelle cellule 3, est signalée par les stations 11 ancienne et nouvelle 13 au BSC 33 afin d'effectuer un transfert, en anglais « hand-over » en inscrivant le terminal 21 dans une zone d'une table de mobilité 330 correspondant à la station nouvelle 13 qui va alors gérer les communications du terminal 21 avec la station nouvelle 13.

Si, par la suite, le terminal 21 sort de la cellule nouvelle 3 et entre dans la cellule mitoyenne 6 appartenant à une seconde grappe 32, les stations 13 et 16 échangent de même des signalisations avec leurs BSC 33, 34 respectifs, et ces derniers utilisent alors le réseau de signalisation 30 pour effacer le terminal 21 de la table de mobilité 330 de la grappe 31 et l'inscrire dans la zone concernant la station 16 d'une table de mobilité 340 du BSC 34 de la seconde grappe 32. Il s'agit donc de réduire la probabilité d'occurrence de ce deuxième cas, c'est-à-dire de définir des constitutions ou topologies de grappes telles que les terminaux 21 restent statistiquement le plus longtemps possible dans une grappe quelconque.

Chaque cellule, de taille et position géographique déterminées, comporte des portions ou tronçons de bord ou frontières mitoyens avec d'autres. Ainsi, la cellule 1 comporte des portions de bord 56, 57, 58 et 59, de longueurs respectives déterminées, mitoyennes avec les cellules respectives 2 à 5 qui l'entourent.

Selon le procédé de l'invention, pour la détermination de la topologie du réseau de radiotéléphonie cellulaire, comportant une pluralité à définir de grappes 31, 32 de stations de base 11 à 18 de gestion de cellules respectives 1 à 8 de tailles et positions déterminées ayant diverses portions de bords mitoyens 56 à 59 de longueurs déterminées, pour gérer le trafic radio d'un nombre déterminé de terminaux mobiles 21 répartis dans les cellules 1 à 8, un certain nombre de stations 11 à 15 et respectivement 16 à 18 définissant chaque grappe respective 31 et 32 étant reliées au contrôleur respectif de la grappe 33, 34 relié par une liaison aux autres contrôleurs 34, 33 pour gérer des tables de mobilité des terminaux 21,

- le procédé consistant à modéliser les déplacements des terminaux 21, déterminant leur répartition dans les diverses cellules 1 à 8, sous la forme d'une loi de mouvement correspondant sensiblement à la loi de mouvement aléatoire de particules de gaz parfaits,
- à calculer des valeurs d'intensités de flux 42 à 45 de franchissement des portions de bords mitoyens 52 à 55 par les terminaux mobiles 21, et
- à effectuer une découpe entre cellules 1 à 8 du réseau, pour déterminer des grappes optimales 31, 32, en suivant des contours fermés 311, 321 de découpe correspondant à une valeur minimale du total des intensités des flux 42 à 45 coupés par les contours 311, 321 de la grappe déterminée.

On rappellera que la loi de déplacement des particules ou molécules de gaz parfaits est utilisable pour déterminer des longueurs de libre parcours moyen entre deux collisions de particules. Par unité de temps élémentaire, une particule se trouve dans un volume cylindrique de section correspondant à sa taille et de longueur proportionnelle à sa vitesse, liée à la température. Il y a donc collision, lorsque deux des volumes élémentaires présentent une zone d'intersection, si les deux particules sont situées au même instant dans la zone d'intersection. Les chocs sont supposés parfaitement élastiques, c'est-à-dire que le vecteur vitesse, ou de quantité de mouvement, conserve son amplitude.

La probabilité de collision croît donc avec la densité de particules et le libre parcours moyen varie comme l'inverse de la probabilité de collision. De ce fait, en cas de nombreuses collisions, il se produit une sorte de confinement des particules.

En d'autres termes, une portion de trajectoire brisée de longueur déterminée (ou pour un temps de parcours déterminé) est constituée d'un certain nombre de segments, parcourus à vitesse constante, d'orientations différentes et aléatoires.

Si la densité est faible, la portion de trajectoire comporte un nombre restreint de segments de grande taille. La probabilité pour qu'une limite ou paroi du volume global contenant les particules soit heurtée par la particule considérée est donc élevée.

Si, par contre, la densité s'accroît, les quelques segments rectilignes de grande taille ci-dessus sont chacun en quelque sorte brisés en plusieurs morceaux d'orientations différentes, statistiquement perpendicu-laires puisque étant équirépartis dans toutes les directions, selon le mouvement dit Brownien. La trajectoire globale est alors « roulée en boule » et le mouvement de la particule obéit à une loi de probabilité ayant une composante importante tendant à imposer un mouvement stationnaire de confinement. La probabilité de heurt d'une paroi limitant le volume total est donc alors réduite. En d'autres termes la vitesse apparente radiale statistique ou moyenne, ou de non-stationarité, est alors réduite.

Plus précisément, pour les calculs de topologie par calculateur, on estime ici, d'après des informations mémorisées spécifiant une nature d'une zone géographique de la position de chaque cellule 1 à 8, une densité moyenne de terminaux 21 dans la cellule considérée 1 à 8, par exemple une nature de terrain de montagne à faible densité de population, une étendue d'eau, une forêt et autres, puis on estime, d'après ladite loi des gaz parfaits, une vitesse moyenne de déplacement des terminaux 21, inversement proportionnelle à la densité, et on calcule les flux inter-cellules 42 à 45 de franchissement de chaque portion de bord mitoyen respectif 56 à 59 de la cellule 1 considérée, d'intensité variant comme la vitesse moyenne estimée, la densité et les longueurs des bords mitoyens considérés 56 à 59.

On a ainsi la relation suivante, de formule (1), entre la vitesse V des terminaux 21 et les autres variables :

$$V = \pi\, S/N \times Fl/P \qquad (1)$$

Avec

S : surface de la cellule (1) considérée
N : nombre moyen de terminaux dans la cellule 1, croissant avec sa surface S,
Fl : flux (42) de terminaux 21
P : longueur de tronçon de périmètre (56) ou bord 56 de la cellule 1 traversé par le flux 42.
S / N représente donc la densité D ou concentration de terminaux 21 dans la cellule 1.

Si la cellule considérée 1 est déjà en service, on en connaît, outre la surface S et le périmètre P, le nombre moyen N de terminaux 21 et les caractéristiques de leur trafic téléphonique, c'est-à-dire les flux 42 à 45. La vitesse V de sortie de la cellule 1 s'en déduit donc, pour paramétrer cette même équation (1) pour une cellule prévue.
Ainsi, pour cette dernière, la formule (1) devient la formule (2):

$$Fl = V \times P\,\pi\,D \qquad (2)$$

et on peut donc calculer les flux prévisionnels 42 à 45. Si le flux considéré (42) concerne deux cellules (1, 2) de la même grappe (31), le trafic de signalisation de hand-over reste confiné dans la grappe 31, sans utilisation du réseau 30 inter-BSC 33, 34. Par contre, un flux entre par exemple la cellule 3 du groupe 31 et la cellule 6 du groupe 32 induit un tel trafic de signalisation dans le réseau 30.
L'ensemble des valeurs de flux comme 42 à 45 des diverses cellules 1 à 8 du réseau représente ainsi une matrice de contraintes pour la découpe à effectuer du réseau en grappes 31, 32.
Pour ainsi réduire à un minimum le trafic du réseau de signalisation 30, on définit ici successivement les contours 311 et 321, en cherchant à obtenir à chaque fois un minimum d'intensité de flux, comme 42 à 45, coupé pour la grappe considérée 31, 32, vers une grappe voisine de la grappe considérée 31, 32. Les flux d'entrée opposés sont ici supposés être de mêmes valeurs que leurs homologues respectifs de sortie. Cette hypothèse peut être fausse par exemple dans le cas d'une voie à haut débit de circulation de véhicules, à un seul sens de circulation traversant une cellule, dont les passagers sont susceptibles de téléphoner. De façon rigoureuse, le flux intercellule à prendre en compte est la somme des valeurs absolues des deux flux opposés, le flux entrant dans une cellule étant donc calculé comme indiqué en tant que flux sortant d'une autre.
On cherche donc une découpe en grappes qui rende minimale une fonction de coût Ct représentée selon la formule (3) par la somme des flux bidirectionnels coupés, que l'on peut normer par la capacité du réseau :

$$Ct = \Sigma\, (Flej + Flsj) / (\text{capacité } j)^2 \qquad (3)$$

avec

Flej : flux entrant coupé,
Flsj : flux sortant coupé,
j étant un indice désignant la grappe considérée (31).

La capacité ci-dessus peut par exemple être exprimée par le nombre d'abonnés de la grappe (31) considérée ou encore par le nombre de cellules (1 à 5) de la grappe (31). La fonction de coût Ct doit être optimisée globalement, c'est-à-dire qu'elle représente la somme de fonctions de coûts élémentaires pour chaque grappe 31, 32. On peut donc rechercher des minima respectifs pour les grappes 31, 32, sachant toutefois qu'une découpe optimale (311) des cellules 1 à 5 correspondant à un minimum de la fonction de coût élémentaire de la grappe 31 peut être remise en cause. En effet, il peut s'avérer qu'un changement de la découpe de la grappe 31, avec une dégradation correspondante de la fonction de coût élémentaire, soit au moins compensée par une amélioration d'une ou plusieurs autres fonctions de coût élémentaires d'autres grappes 32.

Un algorithme d'optimisation, exécuté sur le système de calcul, effectue des regroupements progressifs de cellules voisines, c'est-à-dire qu'un contour 311, 321 est modifié progressivement par inclusion de cellules adjacentes ou exclusion de cellules de bord, afin de déterminer les fonctions de coût élémentaires des diverses topologies ainsi déterminées.

En particulier, l'utilisateur peut, par des moyens interactifs avec le système de calcul, ou le programme de calcul, fixer ici un seuil maximal d'intensité totale admissible de flux coupé par contour 311. 321, et, lorsqu'on effectue un cheminement de coupure de flux pour définir l'un des contours 311, 321, on valide la topologie de la grappe 31, 32 considérée, c'est-à-dire les identités des stations ou cellules la composant, si le seuil ci-dessus n'est pas dépassé.

Des solutions apparemment optimales mais irréalistes seraient de ne retenir qu'un nombre très restreint de BSC 33, 34, voire un seul. Contrairement à ce type de solutions, on fixe un nombre minimal de grappes 31, 32 à déterminer (ou un nombre maximal de cellules par grappe) et, si ce nombre n'est pas finalement atteint pour une topologie déterminée de la pluralité de grappes 31, 32, on effectue une autre détermination de topologie globale, selon d'autres contours.

Dans le même but, pour équilibrer la répartition des stations 11 à 18 entre les diverses grappes 31, 32, par des moyens interactifs avec le système de calcul, ou le programme de calcul, on fixe un nombre minimal de stations 11 à 18 par grappe 31, 32 et, si ce nombre est dépassé pour une topologie d'une des grappes 31, 32, l'utilisateur ou le programme effectue une autre détermination de topologie globale, selon d'autres contours 311, 321.

Dans cet exemple, chaque cellule 1 à 8 est découpée en plusieurs zones de densités spécifiques de terminaux 21. Pour la clarté, on n'a ici représenté que des zones 52 à 55 de la cellule 1, limitées par les portions de bord respectifs 56 à 59. Chaque zone 52 à 55 a des particularités géographiques spécifiques et donc une densité de terminaux qui lui est propre. Les calculs des vitesses sont alors effectués pour chaque zone 52 à 55 et on calcule les dits flux traversant les portions de bord 56 à 59 d'après les vitesses de terminaux 21 associées aux densités spécifiques des zones 52 à 55. Un flux déterminé 42 d'une portion de bord 56 peut donc être calculé par sommation du flux de sortie de la zone 52 associée à la portion de bord 56 avec les flux des autres zones 53 à 55. En particulier, une portion de bord 56 à 59 pourrait, dans un autre exemple, limiter plusieurs zones de densités différentes 52 à 55.

Il peut aussi être nécessaire d'ajouter une cellule 1 à un réseau de cellules existantes 2 à 8. En pareil cas, la cellule 1 est constituée de quatre zones 52 à 55 qui appartenaient initialement aux cellules voisines respectives 2 à 5 et dont le trafic téléphonique a été observé, comme évoqué plus haut lors de l'exposé de la formule (1). Les zones peuvent, par exemple être définies sur des moyens d'affichage du système de calcul à l'aide de moyens interactifs de définition des zones. Ce trafic fournit donc la densité D de terminaux 21 actifs, qui représente, à un coefficient déterminé d'activité, le nombre de terminaux 21, actifs ou en veille.

Les valeurs D de densités spécifiques ayant ainsi été validées par des relevés mémorisés après mise en service des cellules 2 à 5, on regroupe plusieurs zones 52 à 55 de cellules voisines en service 2 à 5 en une cellule supplémentaire 1 et le système de calcul en calcule les dits flux 42 à 45 à partir des densités spécifiques validées, qui ont permis d'obtenir les valeurs de flux 42 à 45.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de détermination de la topologie d'un réseau de radiotéléphonie cellulaire existant ou prévisionnel, comportant une pluralité de grappes à définir (31, 32) de stations de base (11 - 18) de gestion de cellules respectives (1 - 8) de tailles et positions déterminées ayant diverses portions de bords mitoyens de longueurs déterminées, pour gérer le trafic radio d'un nombre déterminé de terminaux mobiles (21) répartis dans les cellules (1 - 8), les stations (11 - 18) de chaque grappe étant reliées à un contrôleur de la grappe (33, 34) relié aux autres contrôleurs de grappe (34, 33) pour gérer la mobilité des terminaux (21), procédé **caractérisé par le fait que**

   - on modélise les déplacements des terminaux (21), déterminant leur répartition dans les diverses cellules (1 - 8), sous la forme de sensiblement la loi de mouvement aléatoire de particules de gaz parfaits,
   - on en calcule des valeurs d'intensités de flux (42 - 45) de franchissement des portions de bords mitoyens (56 - 59) par les terminaux mobiles (21), et
   - on effectue une découpe entre cellules (1 - 4), pour délimiter des grappes optimales (31, 32), en suivant des contours fermés (311, 321) de découpe correspondant à une valeur minimale du total des intensités des flux coupés (42 - 45) par les divers contours (311, 321).

**2.** Procédé de selon la revendication 1, dans lequel

- on estime, d'après des informations spécifiant une nature d'une zone géographique de la position de chaque cellule (1 - 8), une densité moyenne de terminaux (21) dans la cellule considérée (1 - 8),
- on estime, d'après ladite loi, une vitesse moyenne de déplacement des terminaux (21), inversement proportionnelle à la densité, et
- on calcule les flux inter-cellules de franchissement de chaque portion de bord mitoyen (56 - 59) de la cellule (1) considérée, d'intensité variant comme la vitesse moyenne estimée, la densité et les longueurs des bords mitoyens considérés (56 - 59).

**3.** Procédé selon l'une des revendications 1 et 2, dans lequel on définit successivement les contours, en cherchant à obtenir à chaque fois un minimum d'intensité de flux coupé pour la grappe considérée (31, 32).

**4.** Procédé selon la revendication 3, dans lequel on fixe un seuil maximal d'intensité totale admissible de flux coupé par contour (311, 321), et, lorsqu'on effectue un cheminement de coupure de flux pour définir l'un des contours, on valide la topologie de la grappe considérée si le seuil n'est pas dépassé.

**5.** Procédé selon l'une des revendications 1 à 4, dans lequel on fixe un nombre minimal de grappes (31, 32) à déterminer et, si ce nombre n'est pas finalement atteint pour une topologie déterminée de la pluralité de grappes (31, 32), on effectue une autre détermination de topologie globale, selon d'autres contours.

**6.** Procédé selon l'une des revendications 1 à 5, dans lequel on fixe un nombre minimal de stations (11 - 18) par grappe et, si ce nombre est dépassé pour une topologie d'une des grappes (31, 32), on effectue une autre détermination de topologie globale, selon d'autres contours.

**7.** Procédé selon les revendications 2 et 6 ensemble, dans lequel on découpe chaque cellule (2 - 5) en plusieurs zones (52 - 55) de densités spécifiques de terminaux (21) et on calcule les dits flux (42 - 45) d'après les vitesses de terminaux (21) associées aux densités spécifiques des zones.

**8.** Procédé selon la revendication 7, dans lequel, les valeurs de densités spécifiques ayant été validées par des relevés après mise en service de certaines des cellules (2 - 5) du réseau, on regroupe plusieurs zones (52 - 55) de cellules voisines en service (2 - 5) en une cellule supplémentaire (1) et on en calcule les dits flux (42 - 45) à partir des densités spécifiques validées.

**Claims**

**1.** Method of determining the topology of an existing or anticipated cellular radiotelephone network having a plurality of clusters to be defined (31, 32), base stations (11 to 18) for the administration of respective cells (1 to 8) of defined size and position having various shared border portions of defined lengths for administering the radio traffic of a defined number of mobile terminals (21) distributed in the cells (1 to 8), the stations (11 to 18) of each cluster being linked to a cluster controller (33, 34) linked to other cluster controllers (34, 33) in order to administer the mobility of the terminals (21), the method being
**characterised in that**

- the movements of the terminals (21) are modelled, defining the distribution thereof in the various cells (1 to 8), substantially corresponding to the law of random motion for particles of perfect gases,
- intensity values are calculated for the flows (42 to 45) for crossing of the shared border portions (56 to 59) by the mobile terminals (21), and
- a section is mapped between cells (1 to 4) in order to delimit optimal clusters (31, 32) following closed contours (311, 321) of the section corresponding to a minimum value of the total intensities of the sectioned flows (42 to 45) according to the various contours (311, 321).

**2.** Method as claimed in Claim 1, wherein

- using data specifying the type of geographic zone of the position of each cell (1 to 8) estimates are made of an average density of the terminals (21) in the relevant cell (1 to 8),
- the inter-cell flows for crossing of each shared border portion (56 to 59) of the relevant cell (1) are calculated, with an intensity varying like the estimated average speed, the density and lengths of the relevant shared borders (56 to 59).

3. Method as claimed in any one of Claims 1 and 2, wherein the contours are successively defined, seeking each time to obtain a minimum intensity of the sectioned flow for the relevant cluster (31, 32).

4. Method as claimed in Claim 3, wherein a maximum threshold is fixed for the total admissible intensity of the sectioned flow per contour (311, 321) and, when a path of the sectioned flow is mapped in order to define one of the contours the topology of the relevant cluster is validated if the threshold is not exceeded.

5. Method as claimed in any one of Claims 1 to 4, wherein a minimum number of clusters (31, 32) to be defined is fixed and, if this number is not ultimately attained for a defined topology of the plurality of clusters (31, 32), another definition of the global topology is mapped according to other contours.

6. Method as claimed in any one of Claims 1 to 5, wherein a minimum number of stations (11 to 18) per cluster is fixed and, if this number is exceeded for a topology of one of the clusters (31, 32), and another definition of the global topology is mapped according to other contours.

7. Method as claimed in Claims 2 and 6 taken together, wherein each cell (2 to 5) is sectioned into a plurality of zones (52 to 55) with specific densities of terminals (21) and the said flows (42 to 45) are calculated according to the speeds of terminals (21) associated with the specific densities of the zones.

8. Method as claimed in Claim 7, wherein, as the specific density values have been validated by records following activation of certain cells (2 to 5) of the network, a plurality of zones (52 to 55) of neighbouring active cells (2 to 5) is regrouped in an additional cell (1), and the said flows (42 to 45) are calculated according to the validated specific densities.


**Patentansprüche**

1. Verfahren zum Bestimmen der Topologie eines bestehenden oder voraussichtlichen zellulären Mobilfunknetzes, das eine Mehrzahl von zu definierenden Clustern (31, 32) von Basisstationen (11 bis 18) für die Verwaltung von jeweiligen Zellen (1 bis 8) von bestimmter Größe und Position aufweist, die verschiedene Abschnitte von gemeinschaftlichen Rändern mit bestimmten Längen aufweisen, zum Verwalten des Funkverkehrs einer bestimmten Anzahl von Mobilfunk-Endgeräten (21), die in den Zellen (1 bis 8) verteilt sind, wobei die Stationen (11 bis 18) von jedem Cluster mit einer Steuereinheit des Clusters (33, 34) verbunden sind, die mit anderen Cluster-Steuereinheiten (34, 33) zum Verwalten der Mobilität der Endgeräte (21) verbunden ist, wobei das Verfahren **dadurch gekennzeichnet ist, dass:**

 - die Bewegungen der Endgeräte (21) modelliert werden, wodurch ihre Verteilung in den verschiedenen Zellen (1 bis 8) bestimmt wird, in Form von im Wesentlichen dem Gesetz der Zufallsbewegung von Partikeln von idealen Gasen,
 - daraus Werte der Fluss-Stärken (42 bis 45) von dem die gemeinschaftliche Randabschnitte (56 bis 59) überquerenden Mobilfunk-Endgeräte (21) berechnet werden, und
 - zum Abgrenzen der optimalen Cluster (31, 32) ein Zuschneiden zwischen Zellen (1 bis 4) durchgeführt wird, indem geschlossenen Schnitt-Konturen (311, 321) gefolgt wird, die einem minimalen Wert der Gesamtheit der Stärken der durch die verschiedenen Konturen (311, 321) zugeschnittenen Flüsse (42 bis 45) entsprechen.

2. Verfahren gemäß Anspruch 1, wobei

 - gemäß den Informationen, die eine Art eines geographischen Bereichs der Position von jeder Zelle (1 bis 8) spezifizieren, eine mittlere Dichte von Endgeräten (21) in der betrachteten Zelle (1 bis 8) geschätzt wird,
 - gemäß dem Gesetz eine durchschnittliche Bewegungsgeschwindigkeit der Endgeräte (21) umgekehrt proportional zu der Dichte bestimmt wird, und
 - die Zwischenzellen-Überquerungsflüsse von jedem gemeinschaftlichen Randabschnitt (56 bis 59) der betrachteten Zelle (1) berechnet werden, mit einer Stärke, die wie die geschätzte durchschnittliche Geschwindigkeit, die Dichte und die Längen der betrachteten gemeinschaftlichen Ränder (56 bis 59) variiert.

**3.** Verfahren gemäß einem der Ansprüche 1 und 2, wobei die Konturen nacheinander definiert werden, wobei versucht wird, bei jedem Mal eine minimale Stärke des zugeschnittenen Flusses für das betrachtete Cluster (31, 32) zu erhalten.

**4.** Verfahren gemäß Anspruch 3, wobei eine Höchstschwelle der zulässigen Gesamtstärke des (311, 321) zugeschnittenen Flusses pro Kontur festgesetzt wird, und, wenn eine Veränderung des Schnittes des Flusses erfolgt, um eine der Konturen zu definieren, wird die Topologie des betrachteten Clusters validiert, wenn die Schwelle nicht überschritten wird.

**5.** Verfahren gemäß einem der Ansprüche 1 bis 4, wobei eine minimale Anzahl von zu bestimmenden Clustern (31, 32) festgesetzt wird, und, wenn diese Anzahl am Ende für eine bestimmte Topologie der Mehrzahl von Clustern (31, 32) nicht erreicht wird, eine weitere umfassende Topologie-Bestimmung gemäß anderen Konturen durchgeführt wird.

**6.** Verfahren gemäß einem der Ansprüche 1 bis 5, wobei eine minimale Anzahl von Stationen (11 bis 18) pro Cluster festgesetzt wird, und, wenn diese Anzahl für eine Topologie von einem der Cluster (31, 32) überschritten wird, eine weitere umfassende Topologie-Bestimmung gemäß anderen Konturen durchgeführt wird.

**7.** Verfahren gemäß Anspruch 2 und Anspruch 6, wobei jede Zelle (2 bis 5) in mehrere Zonen (52 bis 55) spezifischer Dichten von Endgeräten (21) zugeschnitten wird, und die Flüsse (42 bis 45) gemäß den Endgeräte-Geschwindigkeiten (21), die mit den spezifischen Dichten der Zonen verknüpft sind, berechnet werden.

**8.** Verfahren gemäß Anspruch 7, wobei, nachdem die Werte von spezifischen Dichten durch Aufzeichnungen nach der Inbetriebnahme von einigen der Zellen (2 bis 5) des Netzes validiert wurden, mehrere Zonen (52 bis 55) von benachbarten Zellen im Betrieb (2 bis 5) in einer zusätzlichen Zelle (1) neu gruppiert werden, und daraus die Flüsse (42 bis 45) ausgehend von den validierten spezifischen Dichten berechnet werden.

FIGURE UNIQUE

## RÉFÉRENCES CITÉES DANS LA DESCRIPTION

**Documents brevets cités dans la description**

- US 6141552 A